# EUROPÄISCHE PATENTSCHRIFT

(11) **EP 1 518 063 B1**
(45) Veröffentlichungstag und Bekanntmachung des Hinweises auf die Patenterteilung: **02.09.2009**
(21) Anmeldenummer: 03730045.6
(22) Anmeldetag: 15.05.2003
(51) Int. Cl.: F16H 57/02

(54) **SYSTEM ZUM HERSTELLEN VON GETRIEBEN**
SYSTEM FOR PRODUCING GEARBOXES
SYSTEME POUR LA PRODUCTION DE TRANSMISSIONS

(30) Priorität: 03.07.2002 DE 10229969
(43) Veröffentlichungstag der Anmeldung: 30.03.2005
(73) Patentinhaber: Wittenstein AG, 97999 Igersheim (DE)
(72) Erfinder: WITTENSTEIN, Manfred, 97980 Bad Mergentheim (DE); BAYER, Thomas, 97999 Igersheim (DE)
(74) Vertreter: Weiss, Peter
(86) Internationale Anmeldenummer: PCT/EP2003/005100
(87) Internationale Veröffentlichungsnummer: WO 2004/005762

(56) Entgegenhaltungen:
- EP-A- 0 957 291
- DE-A- 2 649 949
- PATENT ABSTRACTS OF JAPAN vol. 2000, no. 07, 29. September 2000 (2000-09-29) & JP 2000 110895 A (SUMITOMO HEAVY IND LTD), 18. April 2000 (2000-04-18)
- PATENT ABSTRACTS OF JAPAN vol. 018, no. 628 (M-1713), 30. November 1994 (1994-11-30) & JP 06 241284 A (SUMITOMO HEAVY IND LTD), 30. August 1994 (1994-08-30)

## Beschreibung

Die Erfindung betrifft ein System zum Herstellen von Getrieben, welches aus verschiedenen Baugruppe besteht, entsprechend dem Oberbegriff des Anspruchs 1.

Es sind Getriebe bekannt, die aus ein, zwei oder ggf. drei Gehäuseteilen bestehen und entsprechende Stufen, übersetzungsstufen etc. aufweisen.

Ferner sind Kinematiken bei Getrieben als SP- oder TP-Kinematiken bekannt. Die einzelnen Getriebe sind als Baureihen, beispielsweise in der Kinematik SP oder in der Kinematik TP, ausgeführt. Dabei können entweder nur lange gerade Getriebe einer bestimmten Baureihe ausgeführt werden. Mit ganz anderen Baugruppen können kurze dicke Getriebe beispielsweise als TP-Getriebe ausgeführt werden.

Es gibt daher nur verschiedene Grundbauarten von Getrieben mit unterschiedlichen Kinematiken.

Die Gattungsgemässe DE 26 49 949 A beschreibt ein Getriebe-System, welches einen Getriebebaukasten aufzeigt, der in unterschiedlich gross gewählten Getrieben vorgesehen ist. Dabei können vereinzelt Bauteile aus dem Getriebebaukasten für eine grössere Baureihe verwendet werden.

Die EP 0 957 291 A1 offenbart ein Planetengetriebe, welches durch Austausch einer Antriebswelle ein- oder mehrstufig ausgebildet ist.

Der Patent Abstract of Japan Vol. 2000, No. 07 vom 29.09.2000 & JP 2000 110895 A offenbart einen Elektromotor, welcher mit unterschiedlichen Abtriebsstufen über entsprechende Adapterstücke bestückt werden kann.

Einen ähnlichen Elektromotor zeigt der Patent Abstract of Japan Vol. 018, No. 628 vom 30.11.1994 & JP 06 241284 A.

Der vorliegenden Erfindung liegt daher die Aufgabe zugrunde, ein System der eingangs genannten Art zu schaffen, welches universell einsetzbar ist und bei welchem zumindest teilweise Baugruppen für unterschiedlichste Kinematiken und Grundbauarten von Getriebe verwendet werden können.

Dabei sollen die Anzahl von Baugruppen für beliebige Typen minimiert werden, wobei verschiedene Kinematiken, Übersetzungsverhältnisse bzw. Leistungsflüsse realisiert werden sollen. Ferner sollen die Teile zur Reduktion von Fertigungskosten reduziert werden.

Zur Lösung dieser Aufgabe führen die Merkmale dea Kennzeichens von Anspruch 1.

Bei der vorliegenden Erfindung können mit den wesentlichen Kernbaugruppen, wie beispielsweise Motor, Adapterplatte Motor, Hohlwellenrad der Abtriebsstufe, Hohlrad der Antriebsstufe sowie Abtriebseinheit, ausgeführt als Abtriebswelle oder Abtriebsflansch, ein-, zwei- oder dreistufige Getriebe mit unterschiedlichen Abtriebseinheiten hergestellt werden. Dabei soll die Abtriebseinheit als Abtriebswelle oder als Abtriebsflansch ausgebildet sein.

Ferner ist wichtig bei der vorliegenden Erfindung, dass durch unterschiedliche Montagen und ein entsprechendes unterschiedliches Verbinden des Hohlrades der Antriebsstufe mit einerseits einem Universalplanetenradträger der Abtriebsstufe ein Getriebe nach der TP-Kinematik realisiert werden kann oder durch eine andere Montage das Hohlrad der Antriebsstufe mit dem feststehenden Gehäuse verschraubt werden kann, um ein Getriebe der SP-Kinematik zu realisieren.

Dabei können sämtliche Getriebe als TP- oder SP-Getriebe mit den gleichen Kernbaugruppen zusammenmontiert werden, ohne das zusätzliche andere Baugruppen erforderlich sind.

Gleichzeitig kann in dem Universalsystem bzw. Universalbaukasten jeweils ein ein-, zwei- oder dreistufiges Getriebe wählbar mit Einheiten hergestellt werden.

Hierdurch wird die Anzahl sämtlicher Baugruppen für unterschiedliche Getriebekinematiken und unterschiedliche Getriebetypen, ob lang oder kurz bzw. TP- oder SP-Getriebe, erheblich reduziert.

Dabei sind verschiedene Kinematiken, auch Übersetzungsverhältnisse und Leistungsflüsse mit ein und denselben Baugruppen realisierbar.

Ferner können die einzelnen Baugruppen bzw. Gehäuseteile miteinander verschraubt oder verschweisst, verklebt oder über formschlüssige Verbindungen miteinander verbunden werden. D.h. ferner, dass auch kundenspezifische Getriebe, was insbesondere beispielsweise Flansche, Wellen, Abtriebsflansche, Sensoren od. dgl. betrifft, sehr leicht zu spezifizieren sind, da lediglich diese Baugruppen der Abtriebseinheit bzw. der Abtriebswelle bzw, des Abtriebsflansches spezifiziert und angepasst werden müssen.

Alle übrigen Baugruppen können zur Herstellung eines ein-, 2wei- oder dreistufigen Getriebes als TP- oder SP-Ausführung ihre ursprüngliche Form beibehalten.

Auch können entsprechende einzelne Baugruppen der Abtriebswelle oder des Abtriebsflansches beispielsweise mit entsprechenden Sensoren od. dgl. versehen werden. Dies soll ebenfalls im Rahmen der vorliegenden Erfindung liegen.

Insbesondere die Wahl der Abtriebsbaugruppen bzw. der Abtriebseinheiten eignen sich zur Spezifizierung von Getrieben für spezielle kundenspezifische Veränderungen od. dgl..

Auch ist denkbar, ggf. an ein-, zwei- oder dreistufige Getriebe, ausgeführt als SP- oder TP-Getriebe, unterschiedliche Motoren und Anbauteile anzuflanschen. Hierdurch entsteht ein universelles System, insbesondere ein Universalbaukasten, welcher gewährleistet, dass die einzelnen Baugruppen zur Herstellung von Getrieben mit unterschiedlichen Kinematiken, unterschiedlichen wählbaren Übersetzungsverhältnissen und unterschiedliche Getriebeausführungen bzw. Getriebetypen als SP- oder TP-Baureihen in ein und derselben Anzahl von Baugruppen aufgebaut werden können. Dies spart erhebliche Fertigungskosten ein und gewährleistet dem Benutzer; dass er selbst anwenderspezifisch ein Getriebe aufbauen kann.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1a eine schematisch dargestellte Anordnung von einzelnen Baugruppen zum Herstellen von unterschiedlichen Getrieben, insbesondere zum Herstellen eines einstufigen, zweistufigen und dreistufigen Getriebes;
Figur 1b schematisch dargestellte Ansichten auf einen Kinematikplan eines SP-Getriebes und eines TP-Getriebes;
Figur 2a und 2b schematisch dargestellte Draufsichten auf einen Motor sowie eine Adapterplatte für einen Motor;
Figuren 3a und 3b schematisch dargestellte Längsschnitte durch zwei verschiedene Anbauteile mit Klemmnaben und integriertem Sonnenrad;
Figur 3c einen schematisch dargestellten Längsschnitt durch ein weiteres Anbauteil mit integriertem Sonnenrad und Planetenrad;
Figur 4 einen schematisch dargestellten Längsschnitt durch das Bauteil Hohlrad der Antriebsstufe;
Figur 5 einen schematisch dargestellten Längsschnitt durch ein weiteres Bauteil als Hohlwellenrad der Abtriebsstufe;
Figuren 6a und 6b schematisch dargestellte Längsschnitte durch Abtriebseinheiten, ausgeführt als Abtriebsflansch A_{F} oder Abtriebswelle A_{W}.

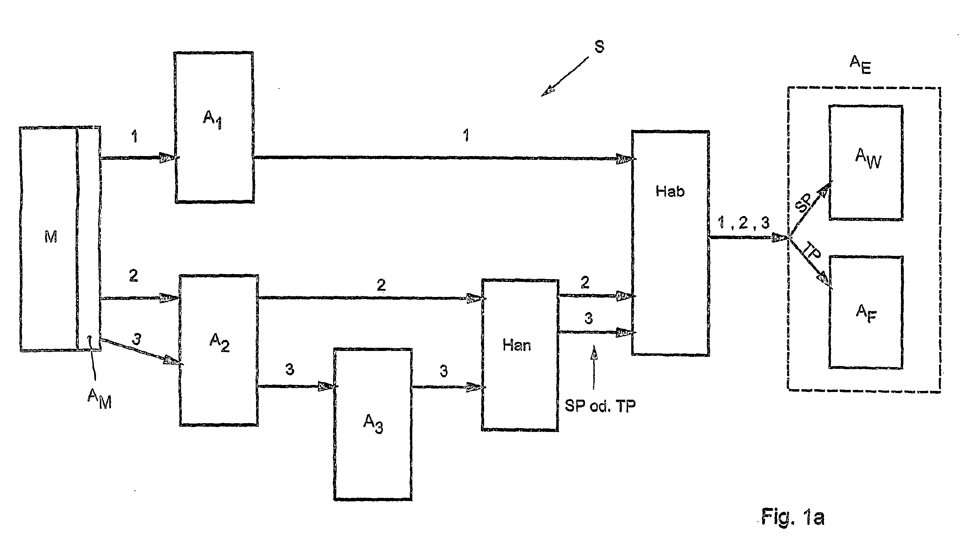

Gemäss Figur 1a zeigt ein erfindungsgemässes System S zum Herstellen von unterschiedlichen Getrieben, einstufigen, zweistufigen oder dreistufigen Getrieben unterschiedliche Möglichkeiten auf, ein ein- oder zwei- oder dreistufiges Getriebe aus unterschiedlichen Baugruppen, zusammenzusetzen, wobei gewisse gleiche Baugruppen in jedem Getriebe verwendet werden können.

Jedes Getriebe kann auch als Baugruppe von Bauteilen mit Motor M, ggf. Adapterplatte Motor A_{M}, sowie Hohlwellenrad der Antriebsstufe H_{ab} und einer hier gestrichelt dargestellte Abtriebseinheit A_{E} verwendet werden.

Dabei kann als Abtriebseinheit A_{E} dem Hohlwellenrad der Abtriebsstufe H_{ab} wahlweise eine Abtriebswelle A_{W} oder ein Abtriebsflansch A_{F} als Baugruppe nachgeschaltet werden.

Soll ein einstufiges Getriebe hergestellt werden, so werden die Baugruppen Motor, ggf. Adapterplatte A_{M}, ein erstes Anbauteil A₁, dann das Hohlwellenrad der Abtriebsstufe H_{ab} und abschliessend eine beliebige Abtriebseinheit A_{E} angefügt. An das Hohlwellenrad der Abtriebsstufe H_{ab} schliesst entweder die Abtriebswelle A_{W} oder der Abtriebsflansch A_{F} als Abtriebseinheit A_{E} an. Die Ausführung der Abtriebseinheit A_{E} ist kundenspezifisch wählbar und lässt sich auch kundenspezifisch ändern.

Hierdurch entsteht ein einstufiges Getriebe, welches sich insbesondere im Bereich der Abtriebseinheit A_{E} kundenspezifisch modifizieren lässt. Beispielsweise können beliebige Flansch, Sonderausführungen von Wellen, Sensoren od. dgl. in diesen Baugruppen modifiziert sein oder diese entsprechend verändert werden.

Diese passen dann noch auf die Baugruppen Motor M, Anbauteil A₁ bzw, insbesondere auf das Hohlwellenrad der Abtriebsstufe H_{ab}.

Um ein zweistufiges Getriebe zu erhalten, wird ebenfalls wieder der Motor M, ggf. die Adapterplatte Motor A_{M} mit einem zweiten Anbauteil A₂ verbunden, an welches ein Hohlrad der Antriebsstufe Hₐₙ anschliesst. An dieses schliesst dann in oben beschriebener Weise das Hohlwellenrad der Abtriebsstufe H_{ab} an, wobei wieder in oben beschriebener Weise je nach Kundenwunsch und Ausführungsform eine beliebige Abtriebseinheit A_{E} als Abtriebswelle A_{W} oder als Abtriebsflansch A_{F} ausgeführt sein kann. Wichtig ist hier, dass zumindest bei der Ausführung eines ein- oder zweistufigen Getriebes zumindest die Baugruppen Motor M, Adapterplatte Motor A_{M} und Hohlwellenrad der Abtriebsstufe H_{ab} und wahlweise die Abtriebseinheit A_{E} wieder ohne Änderungen als gleiche Baugruppen verwendet werden können.

Um ein dreistufiges Getriebe zu erhalten muss bei einem entsprechenden Aufbau des zweistufigen Getriebes lediglich zwischen die Baugruppen Anbauteil A₂ und Hohlrad der Antriebsstufe Hₐₙ ein weiteres Anbauteil A₃ dazwischen eingesetzt werden.

Je nach Kundenwunsch und Ausführung des dreistufigen Getriebes lässt sich dann in oben beschriebener Weise an das Hohlwellenrad der Abtriebsstufe H_{ab} wahlweise eine beliebige Antriebseinheit A_{E} als Antriebswelle Aw oder Antriebsflansch A_{F} anschliessen.

Auf diese Weise lässt sich baukastenartig mit einer minimalen Anzahl von Baugruppen ein ein-, zwei- oder dreistufiges Getriebe realisieren. Die einzelnen Baugruppen müssen lediglich miteinander verschraubt, verschweisst, zusammengefügt oder sonstwie miteinander verbunden werden. Hierauf sei die Erfindung nicht beschränkt.

Ferner ist von Vorteil, dass insbesondere durch die Wahl von Abtriebseinheit A_{E} als Abtriebswelle A_{W} oder Abtriebsflansch A_{F} lange oder kurze Getriebe mit spezifischen Wellen oder Flanschen ein- oder mehrstufig hergestellt werden können. Hierdurch können unterschiedliche Übersetzungsverhältnisse, Leistungsflüsse durch verschiedene Kinematiken als TP oder SP ausgeführt werden.

Hierdurch lassen sich Getriebe universell herstellen, wobei mit ein und denselben, im wesentlichen gleichen Baugruppen Getriebe hergestellt werden können, die unterschiedliche Typen, die unterschiedliche Kinematiken besitzen. Dies wird lediglich mit einer ganz begrenzten Anzahl von Baugruppen als Universalbaukasten realisiert. Dabei können die unterschiedlichen Getriebetypen als SP- oder TP-Getriebe aus Baugruppen ein-, zwei- und dreistufige hergestellt werden. Auf diese Weise lässt sich nicht nur der Getriebetyp sondern auch die gewünschte Grösse des Getriebes und die gewünschte Kinematik des Getriebes kundenspezifisch variieren und individuell mit ein und denselben Bauteilen erstellen.

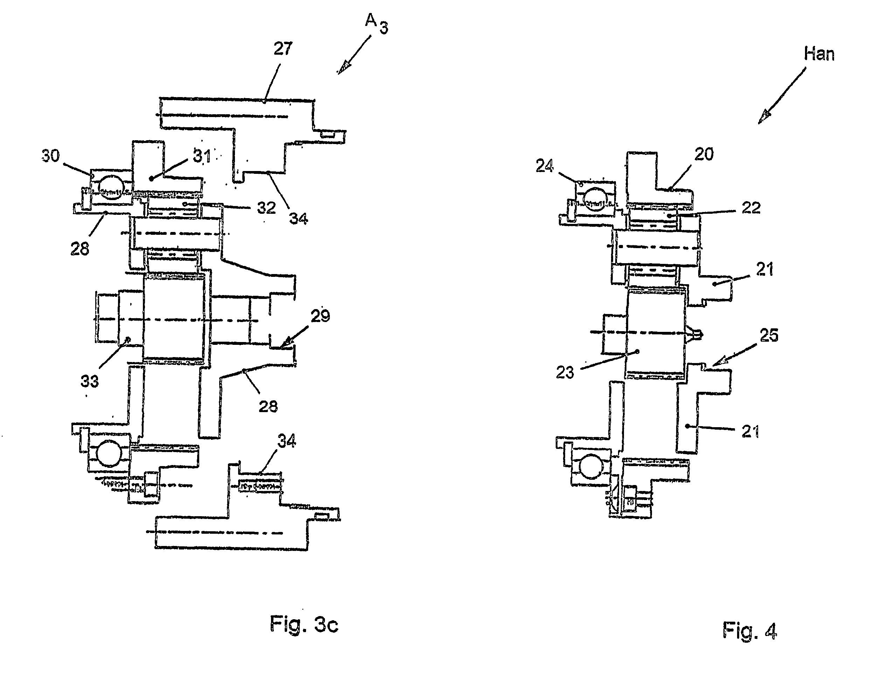

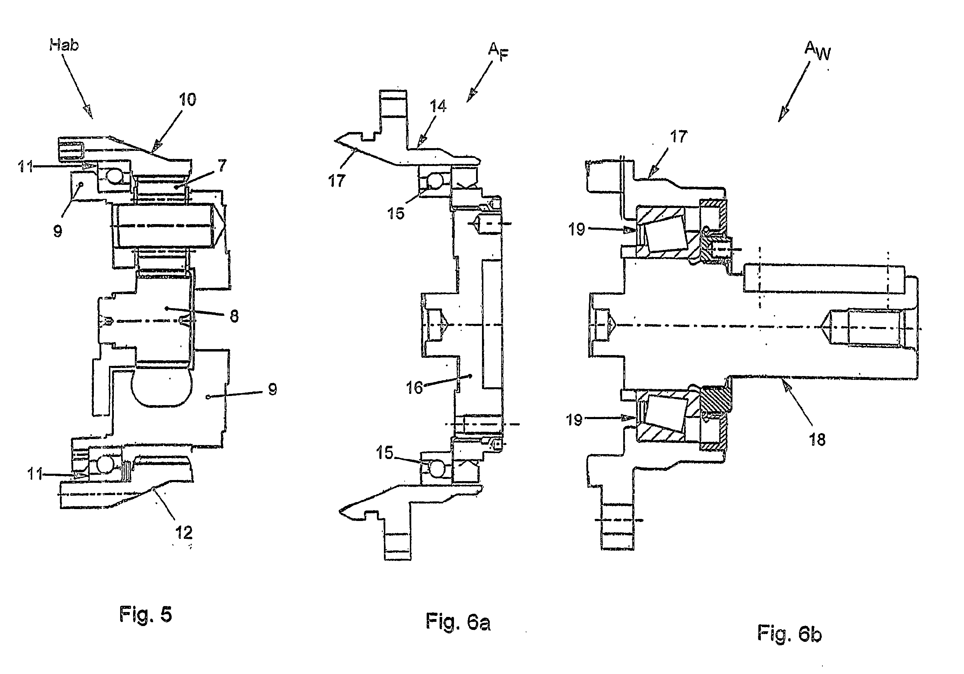

Zur Herstellung eines zweistufigen TP-Getriebes wird das Hohlrad 20 der Antriebsstufe Hₐₙ, siehe Figur 4, mit dem Universalplanetenradträger 9 des Hohlwellenrades H_{ab} der Abtriebsstufe, siehe Figur 5, fest verbunden, insbesondere fest verschraubt.

Zur Herstellung eines zweistufigen SP-Getriebes, wird durch einen anderen Montagevorgang ein Hohlrad 20 des Hohlrades der Antriebsstufe Hₐₙ mit dem feststehenden Gehäuseteil 3 des Anbauteiles A₂ fest verbunden, insbesondere fest verschraubt.

Dabei können die gleichen Baugruppen Hohlwellenrad der Abtriebsstufe H_{ab} und Hohlrad der Antriebsstufe Hₐₙ sowie Anbauteil A₂ verwendet werden, um entweder ein SP- oder TP-Getriebe zu realisieren. Es kommt hier lediglich auf den unterschiedlichen Montagevorgang der einzelnen Baugruppen an und um hier unterschiedliche Kinematiken mit ein und denselben Baugruppen zu erhalten.

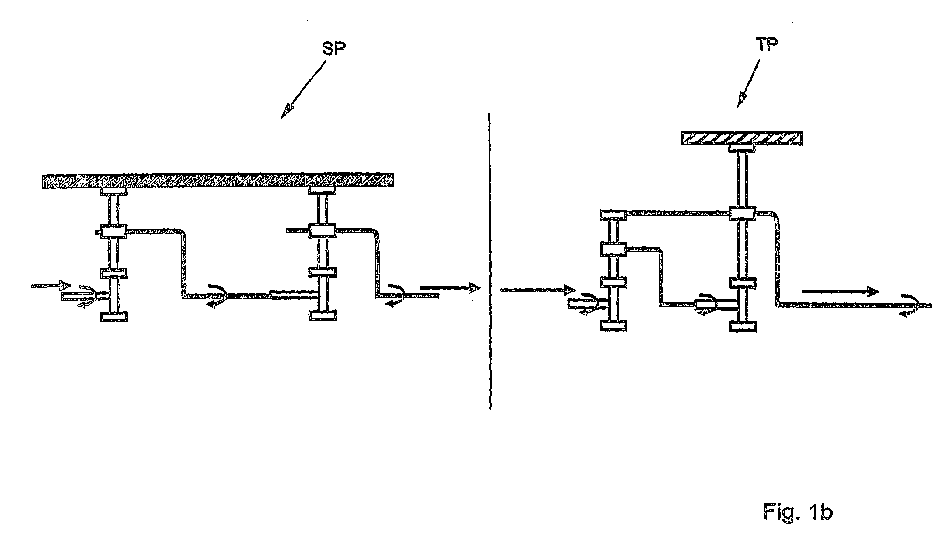

Im folgenden werden die einzelnen Baugruppen zum Herstellen der unterschiedlichen Getriebe wie folgt beschrieben:
Die unterschiedlichen Kinematiken eines SP-Getriebes oder eines TP-Getriebes sind schematisch in Figur 1b dargestellt. Beim Kinematikplan eines SP-Getriebes ergeben sich andere Übersetzungsverhältnisse als beim TP-Getriebe. Auf Einzelheiten des Kinematikplanes des SP- und TP-Getriebes wird nicht näher eingegangen, da diese im Stand der Technik bekannt sind.

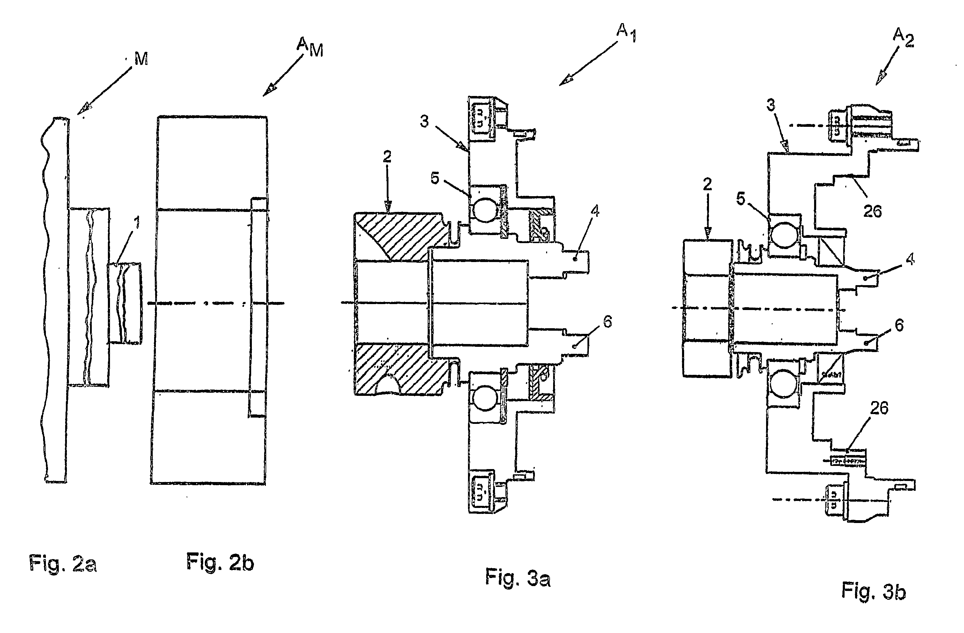

Gemäss Figur 2a kann ein beliebiger Motor M mit einer Motorwelle 1, direkt mit einem Anbauteil A₁ oder A₂, wie es insbesondere in Figur 3a und 3b dargestellt ist, verbunden werden. Ggf. wird eine Adapterplatte Motor A_{M} dazwischen eingesetzt, wobei sich die Adapterplatte Motor A_{M} mit den Anbauteilen A₁ oder A₂ verbinden lässt.

Die hier nur angedeutete Motorwelle 1 greift in eine entsprechende Klemmnabe 2 der Baugruppen A₁ oder A₂ ein. Das Anbauteil A₁ bzw. A2 weist ausser einer Klemmnabe 2 ein Gehäuseteil 3 auf, in welchem jeweils ein Sonnerad 4 über Lager 5 gelagert ist, wobei das Sonnenrad 4 als Steckhülse 6 ausgeführt ist.

Die Anbauteile A₁ und A₂ der Figuren 3a und 3b unterscheiden sich lediglich etwas in der Form und Dimensionierung des Gehäuseteiles 3.

Bei der Herstellung des einstufigen Getriebes ist der Motor M direkt mit der Klemmnabe 2 bzw, mit dem Anbauteil A₁ verbunden. An das Anbauteil A₁ schliesst das Hohlwellenrad der Abtriebsstufe H_{ab} an, welches in Figur 5 dargestellt ist. Dabei weist das Hohlwellenrad der Abtriebsstufe H_{ab} ein Planetenrad 7 auf, welches mit einem Sonnenrad 8 in Eingriff steht. Ein Universalplanetenradträger 9 ist in einem Gehäuseteil 10 über Lager 11 gelagert. Das Gehäuseteil 10 ist im äusseren Bereich mit einem Zentrierflansch 12 versehen, auf welchen die in den Figuren 6a und 6b dargestellte Antriebswelle A_{W} oder der Abtriebsflansch A_{F} aufsteckbar sind.

In Figur 5 ragt der Universalplanetenradträger 9 etwas über das Gehäuseteil 10 hervor. Der Abtriebsflansch A_{F} weist ein Gehäuseteil 14 auf, in welchem ein Lager 15 sowie ein Flansch 16 vorgesehen ist. Der Flansch 16 dient zum Aufnehmen und Anschliessen von beliebigen Werkstücken und/oder Werkzeugen oder zum Antreiben von beliebigen Lasten od.dgl..

Ferner ist der Gehäuseteil 14 mit einem passenden Zentrierflansch 17 versehen, der auf den entsprechenden Zentrierflansch 12 des Hohlwellenrades der Abtriebsstufe H_{ab} passt. Wird bei dem einstufigen Getriebe als Abtriebseinheit A_{E} der Abtriebsflansch A_{F} gewählt, so passen die Gehäuseteile 14 und 10 passgenau ineinander, wobei das Lager 15 des Antriebsflansches A_{F} gleichzeitig eine zusätzliche Lagerung des Universalplanetenradträgers 9 des Hohlwellenrades der Abtriebsstufe H_{ab} bildet.

Dabei wird kraft- und/oder formschlüssig der Universalplanetenradträger 9 mit dem Flansch 16 des Abtriebsflansches A_{F} verbunden.

Wird bei dem einstufigen Getriebe an das Hohlwellenrad H_{ab} die Antriebswelle A_{W} adaptiert und angeschlossen, so schliesst ein Gehäuseteil 17, wie es insbesondere in Figur 6b dargestellt ist, stirnseitig an das Gehäuseteil 10 des Hohlwellenrades der Abtriebsstufe H_{ab} an. Innerhalb des Gehäuseteiles 17 ist eine Welle 18 über ein Lager 19 gelagert.

Wichtig ist ferner bei der vorliegenden Erfindung, dass sich bei Abtriebswelle A_{W} und Abtriebsflansch A_{F}, wie es in den Figuren 6a und 6b dargestellt ist, die Ausführungsform und die Grösse der Gehäuseteile 14 und 17 verändern und kundenspezifisch ausbilden lassen. Gleiches gilt auch für die Grösse und die Art des Flansches 16 bzw. der Welle 18.

Wird, wie es in Figur 1 dargestellt ist, ein zweistufiges Getriebe aufgebaut, so wird der Motor M und das Anbauteil A₂, wie es in Figur 3b beschrieben ist, zusammengefügt, ggf. mit dazwischengesetzter Adapterplatte A_{M}, wobei zwischen das Anbauteil A₂ und das Hohlwellenrad der Abtriebsstufe H_{ab} ein Hohlrad der Antriebsstufe Hₐₙ dazwischen eingesetzt wird, wie es insbesondere in Figur 4 dargestellt ist. Dieses weist ein Hohlrad 20 auf, in welchem ein Universalplanetenradträger 21 zumindest einen Planeten 22 trägt, der ein Sonnenrad 23 kämmt. Dabei ist der Universalplanetenradträger 21 jeweils beidseits des Sonnenrades 22 ausgebildet und trägt einerseits ein Lager 24 und ist auf der gegenüberliegenden Seite als Steckhülse 25 ausgebildet.

Im Bereich der Steckhülse 25 schliesst an das Hohlrad der Antriebsstufe Hₐₙ das Hohlwellenrad der Abtriebsstufe H_{ab} an, in dem das Sonnenrad 8 form- und/oder kraftschlüssig mit dem Universalplanetenradträger 21 verbunden wird und ein innenliegender Bereich des Universalplanetenradträgers 9., siehe Figur 5, in das Hohlrad 20 eingreift und das Hohlrad der Antriebsstufe Hₐₙ integriert bzw. lagert.

Das Hohlrad der Antriebsstufe Hₐₙ ist als sogenannte zweite Stufe, insbesondere Vorstufe, zwischen Anbauteil A₂ und Hohlrad der Abtriebsstufe H_{ab} einsetzbar.

Das Lager 24 des Hohlrades der Antriebsstufe Hₐₙ wird beim Zusammenfügen der Baugruppen A₂ und Hₐₙ im Gehäuseteil 3 ein einem Lagersitz 26 des Gehäuseteiles 3 der Baugruppe A₂, siehe Figur 3b, gelagert bzw, aufgenommen. Formschlüssig wird das Sonnenrad 4 des Anbauteiles A₂ mit dem Sonnenrad 23 des Hohlrades der Antriebsstufe Hₐₙ verbunden.

Ferner lassen sich die Gehäuseteile 3 und 10 des Anbauteiles A₁ bzw. Hohlwellenrad der Abtriebsstufe H_{ab}, wie sie in den Figuren 3b und 5 dargestellt sind, miteinander verbinden, wobei dazwischen das Hohlrad der Antriebsstufe Hₐₙ in oben beschriebener Weise eingesetzt ist. Die Gehäuseteile 3 und 10 können miteinander verschraubt, verschweisst oder auch kraft- oder formschlüssig verbunden werden.

Um ein dreistufiges Getriebe zu realisieren, werden die Baugruppen Motor, ggf. Adapterplatte Motor A_{M}, mit dem Anbauteil A₂ (siehe Figur 3b) in oben beschriebener Weise verbunden, wobei zwischen Anbauteil A₂ und dem oben beschriebenen Hohlrad der Antriebsstufe Hₐₙ ein Anbauteil A₃ zwischengeschaltet eingesetzt wird. Dabei besteht das Anbauteil A₃ aus einem Gehäuseteil 27, welches das Gehäuseteil 10 des Hohlwellenrades der Abtriebsstufe H_{ab} und andererseits das Gehäuseteil 3 des Anbauteiles A₂ miteinander verbindet.

Innerhalb des Gehäuseteiles 27 ist ein Hohlrad 31 vorgesehen, welches einen Planeten 32 kämmt, der auf einem Universalplanetenradträger 28 sitzt, Zumindest ein Planet 32 kämmt ein Sonnenrad 33. Ferner sitzt auf einem Teil des Universalplanetenradträgers 28 ein Lager 30. Diese Baugruppen entsprechen in etwa dem Aufbau des Hohlrades der Antriebsstufe Hₐₙ, wie es in Figur 4 aufgezeigt ist.

Wird das Anbauteil A₃ mit dem Hohlrad der Antriebsstufe Hₐₙ zusammengefügt, so greift form- und/oder kraftschlüssig das Sonnenrad 23 in die Steckhülse 29 des Planentenradträgers 28 ein, wobei das Lager 24 in einem Lagersitz des Gehäuseteiles 27 gelagert ist. Hierdurch überträgt der Universalplanetenradträger 28 das Moment auf die Sonne 23.

Andererseits werden beim Verbinden der Baugruppen A₂ und A₃ zum Herstellen des dreistufigen Getriebes die Gehäuseteile 3 und 27 miteinander verbunden, wobei das Lager 30 in den Lagersitz 26 eingreift und das Sonnenrad 33 in die Steckhülse 6 des Planentradträgers 4 des Anbauteiles A2 eingreift. Hierdurch wird ebenfalls eine Zwischenstufe hergestellt.

Um ein TP-Getriebe mit einer TP-Kinematik zu realisieren, insbesondere einer zweistufigen Ausführung wird das Hohlrad 20 des Hohlrades der Antriebsstufe Hₐₙ am Universalplanetenradträger 9 des Hohlwellenrades der Abtriebsstufe H_{ab} verbunden bzw. verschraubt.

Soll ein Getriebe, beispielsweise ein zweistufiges Getriebe, der SP-Kinematik hergestellt werden, so wird in einem anderen Montagevorgang das Hohlrad 20 des Hohlrades der Antriebsstufe Hₐₙ an dem feststehenden Gehäuseteil 3 des Anbauteiles A₂, siehe Figuren 3b und 4, angeschraubt. Auf diese Weise lässt sich mit den Baugruppen Hₐₙ, H_{ab} und A₂ durch unterschiedliche Montage der einzelnen Baugruppen ein SP- oder TP-Getriebe zusammensetzen.

## Patentansprüche

1. Baukastenartiges System zum Herstellen von einem an einen Motor (M) anschliessenden Getriebe aus zumindest einem Anbauteil (A₁, A₂, A₃), einem Hohlrad einer Antriebsstufe (Hₐₙ), einem Hohlwellenrad einer Abtriebsstufe (H_{ab}) und einer Abtriebseinheit (AE) aus einem Abtriebsflansch (A_{F}) oder einer Abtriebswelle (A_{W}),
**dadurch gekennzeichnet,**
**dass**zum Herstellen eines Getriebes der TP-Kinematik ein Hohlrad (20) des Hohlrades der Antriebsstufe (Hₐₙ) mit einem Universalplanetenradträger (9) des Hohlwellenrades der Abtriebsstufe (H_{ab}), verbunden ist und zum Herstellen eines Getriebes der SP-kinematik ein Hohlrad (20) der Antriebsstufe (Hₐₙ) mit einem feststehenden Gehäuseteil (3, 27) eines Anbauteiles (A₂, A₃) verbunden ist.

2. System nach Anspruch 1, **dadurch gekennzeichnet, dass** ein einstufiges Getriebe aus dem Anbauteil (A₁), dem Hohlwellenrad der Abtriebsstufe (H_{ab}) und der Abtriebswelle (A_{W}) oder dem Abtriebsflansch (A_{F}) oder einer kundenspezifischen Abtriebsstufe zusammensetzbar ist.

3. System nach Anspruch 1, **dadurch gekennzeichnet, dass** ein zweistufiges Getriebe aus dem Anbauteil (A₂), dem Hohlrad der Antriebsstufe (Hₐₙ), dem Hohlwellenrad der Abtriebsstufe (H_{ab}) und anschliessender Antriebseinheit (A_{E}) zusammengesetzt ist.

4. System nach Anspruch 3, **dadurch gekennzeichnet, dass** zum Herstellen eines dreistufigen Getriebes zwischen Anbauteil (A₂) und Hohlrad der Antriebsstufe (Hₐₙ) das weitere Anbauteil (A₃) einsetzbar ist.

5. System nach wenigstens einem der Ansprüche 1 bis 4, **dadurch gekennzeichnet, dass** in das Hohlrad (20) ein Sonnenrad (23), ein Universalplanetenradträger (21) und Planeten (22) eingesetzt sind.

6. System nach wenigstens einem der Ansprüche 1 bis 5, **dadurch gekennzeichnet, dass** das Hohlwellenrad der Abtriebsstufe (H_{ab}) aus einem Gehäuseteile (10) mit dem Universalplanetenradträger (9) und eingesetztem Planeten (7) und Sonnenrad (8) ausgebildet ist.

7. System nach wenigstens einem der Ansprüche 1 bis 6, **dadurch gekennzeichnet, dass** das Anbauteil (A₁, A₂) aus einem Gehäuseteil (3) mit über Lager (5) eingesetzter Klemmnabe (2) mit Sonnenrad (3) mit integrierter Steckhülse (6) gebildet ist.

8. System nach wenigstens einem der Ansprüche 1 bis 7, **dadurch gekennzeichnet, dass** das Anbauteil (A₃) aus einem Gehäuseteil (27) gebildet ist, in welchem ein Hohlrad (31) mit integriertem Planeten (32), Universalplanetenradträger (28) und Sonnenrad (33) eingesetzt sind, wobei der Planetenradträger (28) einerseits eine Steckhülse (29) aufweist.

9. System nach Anspruch 8, **dadurch gekennzeichnet, dass** das Hohlrad (31) des Anbauteiles (A₃) fest mit dem Gehäuseteil (3) des Anbauteiles (A₂) verbunden, insbesondere verschraubt ist und das Hohlrad (20) des Hohlrades der Antriebsstufe (Hₐₙ) fest mit dem Gehäuseteil (27) des Anbauteiles (A₃) verbunden, insbesondere verschraubt ist.

## Claims

1. Modular system for manufacturing a gearbox, which adjoins a motor (M) and comprises at least one add-on part (A₁, A₂, A₃), a ring gear of a drive step (Hₐₙ), a hollow shaft gear of an output step (H_{ab}) and an output unit (AE) comprising an output flange (A_{F}) or an output shaft (A_{W}),
**characterized in**
**that** for manufacturing a TP kinematics gearbox a ring gear (20) of the ring gear of the drive step (Hₐₙ) is connected to a universal planetary gear carrier (9) of the hollow shaft gear of the output step (H_{ab}), and for manufacturing an SP kinematics gearbox a ring gear (20) of the ring gear of the drive step (Hₐₙ) is connected to a stationary housing part (3, 27) of an add-on part (A₂, A₃).

2. System according to claim 1, **characterized in that** a one-speed gearbox may be assembled from the add-on part (A₁), the hollow shaft gear of the output step (H_{ab}) and the output shaft (A_{W}) or the output flange (A_{F}) or a customer-made output step.

3. System according to claim 1, **characterized in that** a two-speed gearbox may be assembled from the add-on part (A₂), the ring gear of the drive step (Hₐₙ), the hollow shaft gear of the output step (H_{ab}) and adjoining drive unit (A_{E}).

4. System according to claim 3, **characterized in that** for manufacturing a three-speed gearbox the further add-on part (A₃) is insertable between add-on part (A₂) and ring gear of the drive step (Hₐₙ).

5. System according to at least one of claims 1 to 4, **characterized in that** a sun gear (23), a universal planetary gear carrier (21) and planet gears (22) are inserted into the ring gear (20).

6. System according to at least one of claims 1 to 5, **characterized in that** the hollow shaft gear of the output step (H_{ab}) is formed from a housing part (10) with the universal planetary gear carrier (9) and inserted planet (7) and sun gear (8).

7. System according to at least one of claims 1 to 6, **characterized in that** the add-on part (A₁, A₂) is formed from a housing part (3) with clamping hub (2), which is inserted by means of bearing (5), with sun gear (3) with integrated plug-in sleeve (6).

8. System according to at least one of claims 1 to 7, **characterized in that** the add-on part (A₃) is formed from a housing part (27), in which a ring gear (31) with integrated planet (32), universal planetary gear carrier (28) and sun gear (33) are inserted, wherein the planetary gear carrier (28) in turn has a plug-in sleeve (29).

9. System according to claim 8, **characterized in that** the ring gear (31) of the add-on part (A₃) is connected in a fixed manner, in particular screw-connected, to the housing part (3) of the add-on part (A₂) and the ring gear (20) of the ring gear of the drive step (Hₐₙ) is connected in a fixed manner, in particular screw-connected, to the housing part (27) of the add-on part (A₃).

## Revendications

1. Système modulaire pour la production d'une transmission se raccordant à un moteur (M) et composé d'au moins un élément annexe (A₁, A₂, A₃), d'une roue creuse d'un étage d'entraînement (Hₐₙ), d'une roue à arbre creux d'un étage de sortie (Hₐᵤ) et d'une unité de sortie (AE) composée d'une bride de sortie (A_{F}) ou d'un arbre de sortie (A_{W}),
**caractérisé par le fait**
**que** pour la production d'une transmission de cinématique TP, une roue creuse (20) de la roue creuse de l'étage d'entraînement (Hₐₙ) est connectée à un porte-roue planétaire universelle (9) de la roue à arbre creux de l'étage de sortie (H_{ab}), et que pour la production d'une transmission de cinématique SP, une roue creuse (20) de la roue creuse de l'étage d'entraînement (Hₐₙ) est connectée à un élément de boîtier stationnaire (3, 27) d'un élément annexe (A₂, A₃).

2. Système selon la revendication 1, **caractérisé par le fait qu'**une transmission à un seul étage peut être composée de l'élément annexe (A₂), de la roue à arbre creux de l'étage de sortie (H_{ab}) et de la roue de sortie (A_{W}) ou de la bride de sortie (A_{F}) ou d'un étage de sortie spécifique au client.

3. Système selon la revendication 1, **caractérisé par le fait qu'**une transmission à deux étages est composée de l'élément annexe (A₂), de la roue creuse de l'étage d'entraînement (Hₐₙ), de la roue à arbre creux de l'étage de sortie (H_{ab}) et de l'unité d'entraînement (A_{E}) s'y raccordant.

4. Système selon la revendication 3, **caractérisé par le fait que** pour la production d'une transmission à trois étages peut être placé, entre l'élément annexe (A₂) et la roue creuse de l'étage d'entraînement (Hₐₙ), l'autre élément annexe (A₃).

5. Système selon au moins l'une des revendications 1 à 4, **caractérisé par le fait que** dans la roue creuse (20) sont placés une roue solaire (23), un porte-roue planétaire universelle (21) et des vis planétaires (22).

6. Système selon au moins l'une des revendications 1 à 5, **caractérisé par le fait que** la roue creuse de l'étage de sortie (H_{ab}) est réalisée à partir d'un élément de boîtier (10) avec le porte-roue planétaire universelle (9) et les vis planétaires y placées (7) et d'une roue solaire (8).

7. Système selon au moins l'une des revendications 1 à 6, **caractérisé par le fait que** l'élément annexe (A₁, A₂) est formé par un élément de boîtier (3) à moyeu de serrage (2) placé par l'intermédiaire d'un roulement (5) avec une roue solaire (3) à douille d'enfichage intégrée (6).

8. Système selon au moins l'une des revendications 1 à 6, **caractérisé par le fait que** l'élément annexe (A₃) est formé par un élément de boîtier (27) dans lequel est placée une roue creuse (31) à vis planétaires intégrées (32), porte-roue planétaire universelle (28) et roue solaire (33), le porte-roue planétaire (28) présentant, d'une part, une douille d'enfichage (29).

9. Système selon la revendication 8, **caractérisé par le fait que** la roue creuse (31) de l'élément annexe (A₃) est connectée, en particulier vissée, de manière fixe à l'élément de boîtier (3) de l'élément annexe (A₂), et que la roue creuse (20) de la roue creuse de l'étage d'entraînement (Hₐₙ) est connectée, en particulier vissée, de manière fixe à l'élément de boîtier (27) de l'élément annexe (A₃).
